# EUROPÄISCHE PATENTANMELDUNG

(11) **EP 1 422 513 A2**
(43) Veröffentlichungstag der Anmeldung: **26.05.2004**
(21) Anmeldenummer: 04001130.6
(22) Anmeldetag: 08.02.1997
(51) Int. Cl.: G01N 21/47

(54) **Optische Sende-und Empfangseinrichtung**

(30) Priorität: 08.02.1997 DE 19704793
(62) Teilanmeldung aus: 98906904.2
(71) Anmelder: Conti Temic Microelectronic GmbH, 90411 Nürnberg (DE)
(72) Erfinder: Braunwarth, Hubert, 86316 Friedberg (DE); Florian, Johann, 86529 Schrobenhausen (DE); Reisacher, Günter, 85051 Ingolstadt (DE)

(57) **Zusammenfassung**

Die Erfindung betrifft eine optische Sende- und Empfangseinrichtung, insbesondere im Infrarotwellenbereich, welche mindestens eine Sendeeinheit und mindestens eine Empfangseinheit mit einer zumindest im Bereich der Sende- und der Empfangseinheiten lichtdurchlässigen Abdeckung aufweist, wobei das von den Sendeeinheiten ausgesandte Licht außerhalb der Abdeckung reflektiert und an den Empfangseinheiten empfangen wird, wobei innerhalb der Abdeckung zwischen Sendeeinheit und Empfangseinheit lichtleitende Mittel vorgesehen sind, mittels derer der an der lichtdurchlässigen Abdeckung der Sendeeinheit reflektierte Anteil des ausgesandten Lichtes zwecks Auswertung der Schwächung des Lichts durch die Verschmutzung der lichtdurchlässigen Abdeckung zur Empfangseinheit geleitet wird, bei der wenigstens eine erste und eine zweite Gruppe von Empfangseinheiten vorgesehen sind, die erste Gruppe von Empfangseinheiten so angeordnet ist, dass sie nur den von einer bestimmten Sendeeinheit gesendeten, im Inneren von der lichtdurchlässigen Abdeckung reflektierten Sendeimpuls empfangen kann, während die zweite Gruppe von Empfangseinheiten so angeordnet ist, dass sie nur die außerhalb der lichtdurchlässigen Abdeckung auftretenden Reflexionen des von der bestimmten Sendeeinheit gesendeten Sendeimpulses empfängt.

## Beschreibung

Die Erfindung betrifft eine optische sende- und Empfangseinrichtung, wie sie beispielsweise der EP 0 312 788 A2, der EP 0 112 498 A2, der EP 0 122 609 A1 oder der DE 196 20 147 A1 entnommen werden kann.
Optische Sende- und Empfangseinrichtungen dienen beispielsweise neben der Übertragung digitaler Daten auch im analogen Anwendungsbereich zur Abtastung von Räumen und Gebilden, als Lichtschranken, zur Abstandsmessung oder Sitzbelegungserkennung in Kraftfahrzeugen. Dabei wird vorzugsweise Licht im nichtsichtbaren Wellenlängenbereich, insbesondere infrarotem Licht, verwandt. Üblicherweise werden die Sende- und Empfangseinrichtungen zum Schutz vor Umwelteinflüssen durch ein Gehäuse geschützt, welches zumindest im Bereich der Sende- und Empfangseinrichtungen lichtdurchlässig für den entsprechenden Wellenlängenbereich gestaltet ist. Generell tritt dabei das Problem auf, daß die lichtdurchlässigen Abdeckungen verschmutzen und so die Lichtausbeute verschlechtern.
Einerseits sind die Pegel der Empfangssignale vom Abstand der reflektierenden Fläche und deren Remission abhängig. So kann ein geringes oder fehlendes Empfangssignal auf eine schlechte Reflexion an den Oberflächen außerhalb der Sende- und Empfangseinrichtung zurückzuführen sein, andererseits auf einen Defekt der sendeeinrichtung deuten. Die stromflußkontrolle zur Prüfung des Ausfalls der sendeeinrichtung erweist sich auch nicht als absolut zuverlässig.
Besonders kritisch zu beurteilen sind jene Lösungen zur Kompensation vom verschmutzungsbedingten Absinken des Empfangspegels, bei denen die Sendeleistung automatisch erhöht wird. So müssen zur Abtastung größerer Entfernungen bereits im unverschmutzten Zustand erhebliche Sendeleistungen ausgestrahlt werden, bei deren nochmaliger Erhöhung langfristig eine Schädigung von Menschen im Abtastraum nicht völlig ausgeschlossen werden kann. Insbesondere für die Anwendung optischer Sende- und Empfangseinrichtungen im Kopfbereich von Menschen, wie dies zur Sitzbelegungserkennung üblich ist, muß dies vermieden werden können.

Aus der DE-OS 196 20 147 A1 ist eine Vorrichtung zur Sichtweitenmessung zu entnehmen, bei der ein Anteil des ausgesandten Lichtes zwecks Vergleichsauswertung außerhalb der lichtdurchlässigen Abdeckung durch eine Glasfaser zur Empfangseinrichtung geleitet wird. Der so erzeugte Referenzstrahl wird genauso wie auch der eigentliche Nutzstrahl zunächst durch die verschmutzte Abdeckung gedämpft. In der Empfangseinrichtung kann der Referenzstrahl zwar in geigneter Weise zum Vergleich mit dem im Beobachtungsraum reflektierten Nutzstrahl dienen, um gemäß der Aufgabe so eine Aussage über den Beobachtungsraum zu gewinnen, diese ist jedoch nur eine Berücksichtigung der Verschmutzung durch eine für beide Strahlen gleiche Schwächung, eine Bestimmung der Verschmutzung hingegen ist es gerade nicht und ist auch überhaupt nicht beabsichtigt. Es wird gezielt eine quasi gleichsam fehlerbehaftete Größe zum Vergleich herangezogen (siehe Spalte 2, Zeilen 35 - 39).
Der EP 0 312 788 A2 ist eine Vorrichtung zur Sichtweitenmessung mittels einer innerhalb der Fahrzeugkabine befindlichen sende ― und Empfangseinheit zu entnehmen, bei der die Windschutzscheibe als der Verschmutzung ausgesetzte lichtdurchlässige Abdeckung interpretiert werden kann. Der an der Windschutzscheibe diffus reflektierte Lichtanteil gelangt zu einem geringen Anteil an die Empfangseinheit und kann dort aufgrund der unterschiedlichen Laufzeiten von den außerhalb der Windschutzscheibe reflektierten Lichtanteilen unterschieden und ausgewertet werden. Nachteil ist dabei der sehr geringe Anteil des an der Windschutzscheibe diffus reflektierten Lichtanteils, der tatsächlich auch wieder an die Empfangseinheit gelangt. Die Vorrichtung ist daher bei der Bestimmung der Verschmutzung sehr ungenau.
Die EP 0 112 498 A2 zeigt eine Anordnung zur selbsttätigen Reinigung von Fenstern, die in einer Ausführungsform eine separate Sende - und Empfangseinheit zur Verschmutzungsmessung vorschlägt, die in einem anderen Winkel zu der lichtdurchlässigen Abdeckung angeordnet ist und daher dieser Lichtanteil das Meßergebnis der anderen Sende ― und Empfangseinheit nicht beeinflußt, jedoch einen erheblichen Mehraufwand bedeutet. Als anderen Alternative kann der EP 0 112 498 und insbesondere der EP 0 122 609 entnommen werden, mittels eines Lichtwellenleiters den an der lichtdurchlässigen Abdeckung der Sendeeinheit reflektierten Lichtanteil zur Empfangseinheit zu leiten.

Dies setzt jedoch wiederum eine zeitfensterbezogene Unterscheidung zwischen Reflexionen innerhalb und außerhalb der lichtdurchlässigen Abdeckung voraus, der steuerungstechnisch aufwendig ist. Außerdem ist der Aufwand durch den Lichtwellenleiter relativ hoch und der mittels diesem erfaßbare Anteil des an der lichtdurchlässigen Abdeckung reflektierten Lichts aufgrund der kleinen Öffnung recht gering.
Aufgabe der Erfindung ist es daher, eine optische Sende- und Empfangseinrichtung vorzustellen, bei der auf eine zeitfensterbezogene Unterscheidung zwischen Reflexionen innerhalb und außerhalb der lichtdurchlässigen Abdeckung verzichtet werden kann.
Diese Aufgabe wird gelöst durch die Merkmale des Patentanspruchs 1. Vorteilhafte Weiterbildungen der Erfindung sind in den Merkmalen der Unteransprüche zu entnehmen.
Mittels lichtleitender Mittel können die unvermeidbar im Inneren an der lichtdurchlässigen Abdeckung auftretenden reflektierten Lichtanteile, welche bei wachsender Verschmutzung stark zunehmen nun an eine Empfangseinheit geleitet werden. Dadurch wird es möglich, diesen intern reflektierten Lichtanteil auszuwerten. Dieser Lichtanteil ist einerseits von dem Grad der Verschmutzung abhängig, andererseits frei von Wirkungen der Anordnung, Struktur und Farbverhältnisse außerhalb der Sende- und Empfangseinrichtung.
Um dabei auf eine zeitfensterbezogene Unterscheidung zwischen Reflexionen innerhalb und außerhalb der lichtdurchlässigen Abdeckung verzichten zu können, wird gemäß Patentanspruch 1 von einer bestimmten Sendeeinheit Licht ausgesandt, dessen an der lichtdurchlässigen Abdeckung reflektierter Lichtanteil über das lichtleitende Mittel zu einer ersten Gruppe von Empfangseinheiten geleitet wird, währenddessen eine zweite Gruppe von Empfangseinheiten nur den außerhalb der lichtdurchlässigen Abdeckung reflektierten Lichtanteil erfaßt. Es ist damit ermöglicht, daß eine Empfangseinheit entweder nur das im Inneren von der lichtdurchlässigen Abdeckung reflektierte Licht oder nur die außerhalb der lichtdurchlässigen Abdeckung auftretenden Reflexionen empfängt.
Die erfindungsgemäße optische Sende- und Empfangseinrichtung ist einfach zu realisieren, aber dennoch äußerst wirkungsvoll. Durch die außenwirkungsfehlerfreie Erkennung des Verschmutzungsgrades kann der analoge Empfangspegel einerseits mit einem Korrekturfaktor korrigiert oder bei Überschreitung eines Schwellwertes eine Reinigung der lichtdurchlässigen Abdeckung veranlaßt werden. So ist die Ansteuerung einer Reinigungsanlage oder einer Anzeige denkbar, die den Benutzer auffordert, die lichtdurchlässige Abdeckung zu reinigen. Eine Gesundheitsgefährdung von Personen im Sendebereich ist ausgeschlossen, eine Erhöhung des Sendepegels nicht erforderlich.
Ein besonders großer Anteil des an der lichtdurchlässigen Abdeckung reflektierten Lichtanteils kann mittels zweier paralleler Reflexionsflächen zur Empfangseinheit geleitet werden, wobei die Realisierung dieser besonders einfach ist.
Das Verhältnis von diffus reflektiertem Licht bei totaler Verschmutzung und keiner Verschmutzung und damit die Erkennung des Verschmutzungsgrades kann dadurch optimiert werden, daß der Abstand zwischen lichtdurchlässiger Abdeckung und den Sende- bzw. Empfangseinheiten parallel zur Senderichtung entsprechend angepaßt wird an den Abstand senkrecht zur Senderichtung zwischen den Sende- und Empfangseinheiten, der wiederum in Abhängigkeit von der Größe und Entfernung des Zielgebietes gewählt wird.
Dazu ist ein numerisches Verhältnis der Abstände zwischen 4,5 und 6,0 denkbar, für welches ein Optimum des Verhältnisses von reflektiertem Licht bei totaler Verschmutzung zu dem bei keiner Verschmutzung zu finden ist.

Die Erfindung wird nachfolgend anhand von Ausführungsbeispielen und Figuren näher erläutert. Es zeigen:
- Figur 1a: erfindungsgemäße Sende- und Empfangseinrichtung sowie Strahlenverlauf außerhalb dieser ins Zielgebiet
- Figur 1b: Vergrößerter Ausschnitt von Figur 1a erfindungsgemäße Sende- und Empfangseinrichtung mit lichtleitenden Mittel innerhalb der lichtdurchlässigen Abdeckung
- Figur 1c: Zuordnungstabelle von Raumpunkten zu bestimmten Sende- und Empfangseinheiten der Sende- und Empfangseinrichtung aus Figur 1a bzw. 1c
- Figur 2: Empfangssignale der Empfangseinheiten mit Nutz- und Verschmutzungssignalbereich
- Figur 3: Nutzsignalpegel und Pegel der empfangenen Reflexionen innerhalb der lichtdurchlässigen Abdeckung in Abhängigkeit vom Grad der Verschmutzung
- Figur 4: das Verhältnis von diffus reflektiertem Licht bei totaler Verschmutzung und keiner Verschmutzung in Abhängigkeit vom Abstand zwischen lichtdurchlässiger Abdeckung und den Sende- und Empfangseinheiten

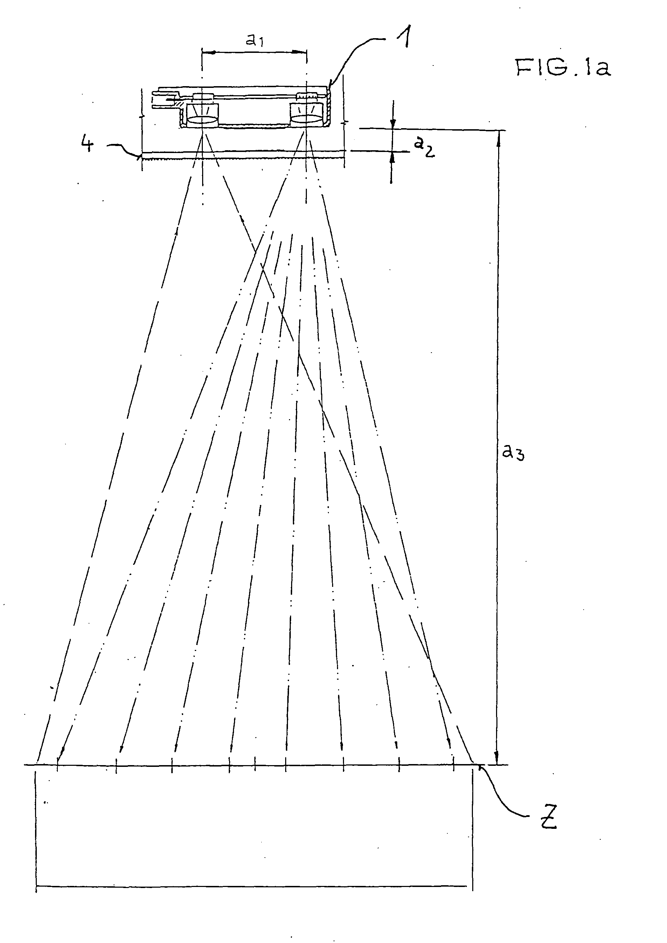

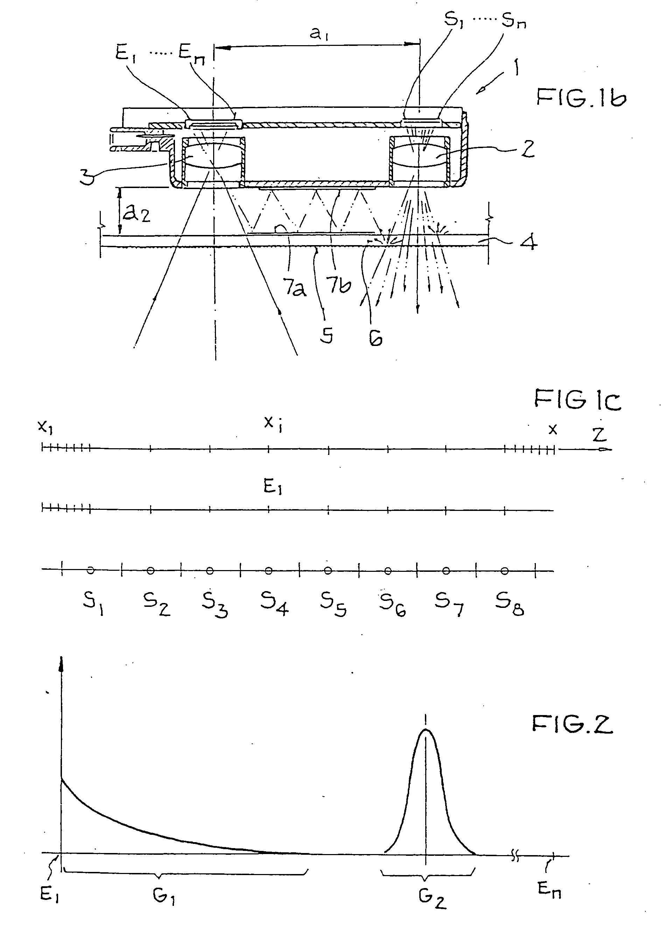

Figur 1a zeigt auch den Strahlenverlauf der in Figur 1b vergrößert dargestellten sende- und Empfangseinrichtung (1) mit ihrer lichtdurchlässigen Abdeckung (4) im Abstand a2 parallel zur Senderichtung. Von den Sendeeinheiten (S₁...Sₙ) wird das Zielgebiet (Z) außerhalb der Sende- und Empfangseinrichtung (1) in einem Abstand a3 abgetastet. Figur 1b zeigt vergrößert eine optische Sende- und Empfangseinrichtung (1), welche n Sendeeinheiten (S₁...Sₙ) und m Empfangseinheiten (E₁...Eₘ) in einem Abstand a1 senkrecht zur Senderichtung aufweist. Vor den Sendeeinheiten (S₁,...Sₙ) ist eine sendeoptik (2) angeordnet, welche die gesendeten Lichtstrahlen auf das Zielgebiet (Z) außerhalb der Sende- und Empfangseinrichtung (1) lenkt. Entsprechend ist vor den Empfangseinheiten (E₁...Eₘ) eine Empfangsoptik (3) angeordnet, welche die reflektierten Lichtstrahlen vom Zielgebiet (Z) auf bestimmte Empfangseinheiten lenkt. In einem Abstand a2 parallel zur Senderichtung ist vor der Sende- und Empfangseinrichtung (1) eine Abdeckung (4) angeordnet, welche die Sende- und Empfangseinrichtung (1) vor Verschmutzungen und Umwelteinflüssen schützt. Diese ist lichtdurchlässig für den Wellenlängenbereich des gesendeten Lichtes. Unvermeidbar wird ein Teil des von den Sendeeinheiten (S₁...Sₐ) gesendeten Lichtes bereits innerhalb der lichtdurchlässigen Abdeckung (4) an den Grenzflächen diffus reflektiert. Die Reflektionsflächen (7a) und (7b) sind so angeordnet, daß ein Teil des diffus reflektierten Lichtes ausgefangen und zur Empfangsseite geleitet werden kann. Dort gelangt es über die Empfangsoptik (3) zu bestimmten Empfangseinheiten. Die Reflektionsflächen (7a, 7b) können dabei beispielsweise als reflektierende Folien oder aufgedampfte Spiegelfläche ausgebildet sein.
Dabei können den einzelnen Sendeeinheiten bestimmte Raumpunkte x; des Zielgebietes(Z) zugeordnet werden, an denen das von der i-ten Sendeeinheit (Si) gesendete Licht reflektiert wird. Die Empfangseinheit (E₁...Eₘ) sind nun so angeordnet, daß diese Reflektionen der Raumpunkte xᵢ erfassen. Damit sind einem Raumpunkt xᵢ eine Sende- und eine Empfangseinheit zuordenbar, wie dies anhand der Zuordnungstabelle in Figur 1c visualisiert wird.

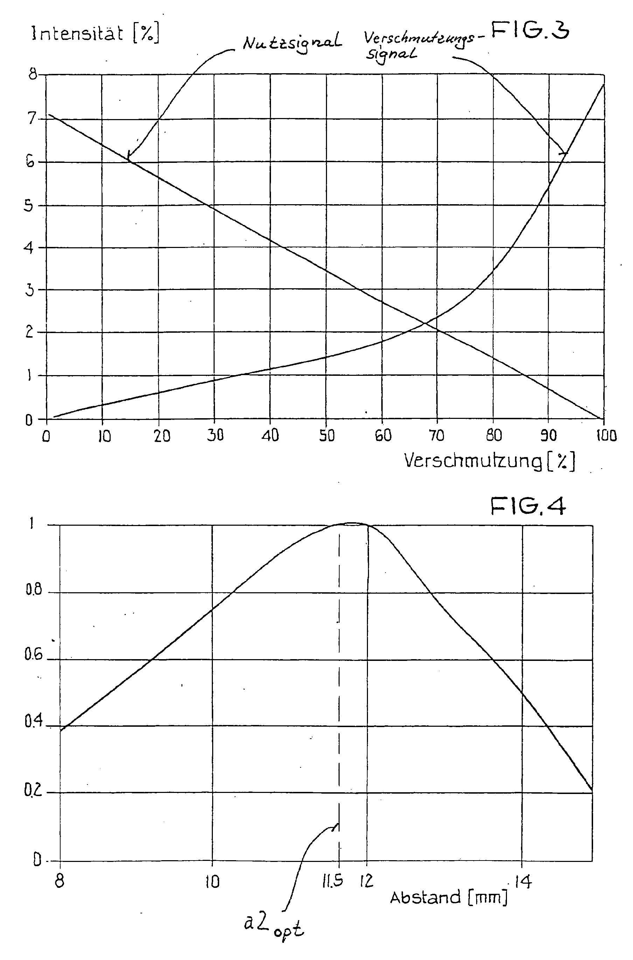

Figur 2 zeigt nun die Empfangssignale der Empfangseinheiten nach einem Sendeimpuls der n-ten sendeeinheit (Sₙ). Das außen am Zielgebiet reflektierte Licht führt zu einem Pegelausschlag bei der zugeordneten, gemäß Patentanspruch 2 oder 4 ersten Gruppe von Empfangseinheiten (G₁). Gleichzeitig wird ein Teil des von der n-ten Sendeeinheit (Sₙ) gesendeten Lichts an den Grenzflächen der lichtdurchlässigen Abdeckung reflektiert und zu der zweiten Gruppe von Empfangseinheiten (G₂) geleitet. Während nun bei zunehmender Verschmutzung das Verschmutzungssignal an der zweiten Gruppe (G₂) von Empfangseinheiten größer wird, verringert sich das Nutzsignal an der ersten Gruppe (G₁). Wird jedoch die erste Sendeeinheit (S₁) ausgelöst, werden im Bereich der zweiten Gruppe (G₂) der Nutzsignalanteil liegen, wie dies im Patentanspruch 5 beschrieben wurde. Die Empfangseinheiten werden also multifunktional genutzt und eine besonders leistungsfähige und zugleich kostengünstige Abtastung eines großen Zielgebietes gewährleistet. Die in den Patentansprüchen 3 bzw. 4 beschriebenen Anordnungen sind analog diesem Ausführungsbeispiel realisierbar, indem entsprechend einzelne Sende- oder Empfangseinheiten ausgewählt werden.

Figur 3 zeigt die Veränderung des intern reflektierten Lichtanteils und des Nutzsignals, welches außerhalb reflektiert wird, in Abhängigkeit von dem Grad der Verschmutzung. Deutlich ist zu erkennen, daß das Nutzsignal mit zunehmender Verschmutzung immer schwächer wird, währenddessen der Anteil des im Inneren der lichtdurchlässigen Abdeckung reflektierten Lichtes wächst. Dies kann durch Veränderung der Empfangssignale erkannt und durch den Vergleich mit dem Pegel bei einer neuen oder gereinigten Abdeckung verglichen werden. Entsprechend können bei Überschreitung gewisser Schwellwerte die empfangenen Nutzsignalwerte korrigiert oder beispielsweise eine Kontrolleuchte ausgelöst werden, welche den Nutzer auffordert, demnächst einmal wieder die Abdeckung der optischen Sende- und Empfangseinrichtung zu reinigen.

Figur 4 zeigt das Verhältnis von diffus reflektiertem Licht bei totaler Verschmutzung und keiner Verschmutzung in Abhängigkeit vom Abstand a2 zwischen lichtdurchlässiger Abdeckung bei einem vorgegebenen Abstand zwischen den Sende- und Empfangseinheiten. Deutlich zu erkennen ist ein optimaler Abstand a2ₒₚₜ (4,5 < a2ₒₚₜ(≈5,2) < 6,0), der damit die Erkennung des Verschmutzungsgrades am besten gewährt. Durch Messung der Signalpegel für zwei Abdeckungen unterschiedlichen Verschmutzungsgrades kann dieser optimale Abstand a2ₒₚₜ für jeden beliebigen Abstand a1 zwischen den Sende- und Empfangseinheiten dadurch gefunden werden, daß der Abstand a2 von Null aus solange erhöht wird, bis das Verhältnis wieder schlechter wird. Eine Anpassung an die Besonderheiten der einzelnen Sende- und Empfangseinrichtung ist so einfach möglich. Werden die reflektierenden Flächen zu nah aneinander gebracht, wird die durch die inneren lichtleitenden Mittel übertragene Lichtleistung geringer, geht der Abstand über das Optimum hinaus, wird die an der lichtdurchlässigen Abdeckung auftreffende Sendeleistung zunehmend schwächer und die nicht vermeidbare Dämpfung der lichtdurchlässigen Abdeckung demgegenüber dominierend, so daß zunehmend Sendeleistung von der lichtdurchlässigen Abdeckung reflektiert wird.

## Patentansprüche

1. Optische Sende- und Empfangseinrichtung (1), insbesondere im Infrarotwellenbereich, welche mindestens eine Sendeeinheit (S) und mindestens eine Empfangseinheit (E) mit einer zumindest im Bereich der Sende- und der Empfangseinheiten (S, E) lichtdurchlässigen Abdeckung (4) aufweist, wobei das von den Sendeeinheiten ausgesandte Licht außerhalb der Abdeckung reflektiert und an den Empfangseinheiten empfangen wird,
wobei innerhalb der Abdeckung (4) zwischen Sendeeinheit und Empfangseinheit lichtleitende Mittel vorgesehen sind, mittels derer der an der lichtdurchlässigen Abdeckung (4) der Sendeeinheit reflektierte Anteil des ausgesandten Lichtes zwecks Auswertung der Schwächung des Lichts durch die Verschmutzung der lichtdurchlässigen Abdeckung (4) zur Empfangseinheit (E) geleitet wird,
**dadurch gekennzeichnet, dass**
wenigstens eine erste und eine zweite Gruppe (G1,G2) von Empfangseinheiten (E) vorgesehen sind,
die erste Gruppe (G1) von Empfangseinheiten (E) so angeordnet ist, daß sie nur den von einer bestimmten Sendeeinheit (S) gesendeten, im Inneren von der lichtdurchlässigen Abdeckung reflektierten Sendeimpuls empfangen kann,
während die zweite Gruppe (G2) von Empfangseinheiten (E) so angeordnet ist, daß sie nur die außerhalb der lichtdurchlässigen Abdeckung (4) auftretenden Reflexionen des von der bestimmten Sendeeinheit (S) gesendeten Sendeimpulses empfängt.

2. Optische Sende- und Empfangseinrichtung nach Patentanspruch 1,
**dadurch gekennzeichnet, dass**
als lichtleitende Mittel an der Innenseite der Abdeckung (4) im Bereich zwischen der Sendeeinheit und der Empfangseinheit eine erste sowie eine zweite, parallel dazu angeordnete spiegelnde Reflexionsfläche (7a,7b) angeordnet sind.

3. Optische Sende- und Empfangseinrichtung nach Patentanspruch 2,
**dadurch gekennzeichnet, daß** bezüglich eines in Abhängigkeit von der Größe und Entfernung (a3) des Zielgebietes (Z) gewählten Abstandes (a1) senkrecht zur Senderichtung zwischen den Sende- und Empfangseinheiten der Abstand (a2) zwischen lichtdurchlässiger Abdeckung und den Sende- bzw. Empfangseinheiten parallel zur Senderichtung derart gewählt wird, daß das Verhältnis von diffus reflektiertem Licht bei totaler Verschmutzung und keiner Verschmutzung am größten ist.

4. Optische Sende- und Empfangseinrichtung nach Patentanspruch 3,
**dadurch gekennzeichnet, daß** das numerische Verhältnis des Abstandes (a1) senkrecht zur Senderichtung zwischen den Sende- und Empfangseinheiten zum Abstand (a2) zwischen lichtdurchlässiger Abdeckung und den Sende- bzw. Empfangseinheiten parallel zur Senderichtung (a1/a2) zwischen 4,5 : 1 und 6,0 : 1, vorzugsweise bei ca. 5,2 liegt.
